# EUROPEAN PATENT APPLICATION

(11) **EP 1 172 912 A2**
(43) Date of publication of application: **16.01.2002**
(21) Application number: 01116525.5
(22) Date of filing: 07.07.2001
(51) Int. Cl.: H02G 3/10, F16B 47/00

(54) **Self-attaching wall box particularly for electrical components**

(30) Priority: 11.07.2000 IT BO000418
(71) Applicant: Migliavacca, Andrea, 20138 Milano (IT)
(72) Inventor: Migliavacca, Andrea, 20138 Milano (IT)
(74) Representative: Gustorf, Gerhard, Dipl.-Ing.

(57) **Abstract**

Self-supporting wall box, particularly for electrical components, containing two chambers (3, 4) of which one (4) can be placed under a vacuum and interface with walls (2) and other similar surfaces so that the unit adheres to that surface.

## Description

### DETAILED DESCRIPTION

### Prior Art

The increasingly widespread use of electrical and electronic equipment, both in the home and at work, implies the need to have available outlets and switches, and often several of them, at various points where no system shunt is available. This makes it necessary to run loose wires, extension cords and splitters which often end up lying on the floor, unattractive and a potential source of injury.

### Objects of the invention

- The main object of this invention is, in this context, to conceive a means that can provide permanent power supply outlets, switches and in general electrical system components, mounted on the walls and the like, even in those places which are not served by system shunts.
- Another object of this invention is to achieve the above within a modular, polyvalent structure that can be applied on basically any type of support.
- Still another object of the present invention is to achieve the previous purposes using a structure which can also be easily removed from its location.
- A further object of the present invention is to achieve the above-mentioned purposes through a simple, effective structure which is functionally safe and relatively cheap in view of the results it easily achieves.

### Summary of the invention

These and still other objects are all achieved with the self-supporting wall box, particularly suited for electrical components according to the present invention, including two chambers (3, 4) one of which (4) serves to create a vacuum interfacing with the wall (2) and similar surfaces so that the box adheres to that surface.

### Brief description of the drawings

- Additional characteristics and advantages of the structure according to this invention appear more evident in the detailed description that follows, indicating the preferred, but not the only possible realization which is presented-solely as an example and which is in no way limiting-in the two attached drawings:
   - Figure 1 shows a transverse section view of the structure according to this invention.

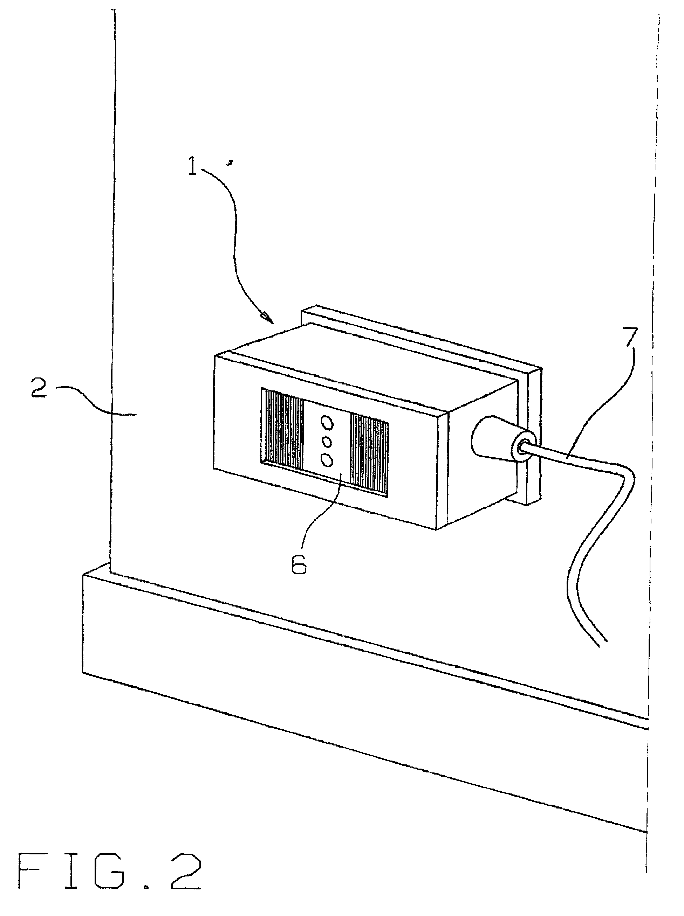

   - Figure 2 shows a prospective view.

### Detailed static description of the preferred embodiment

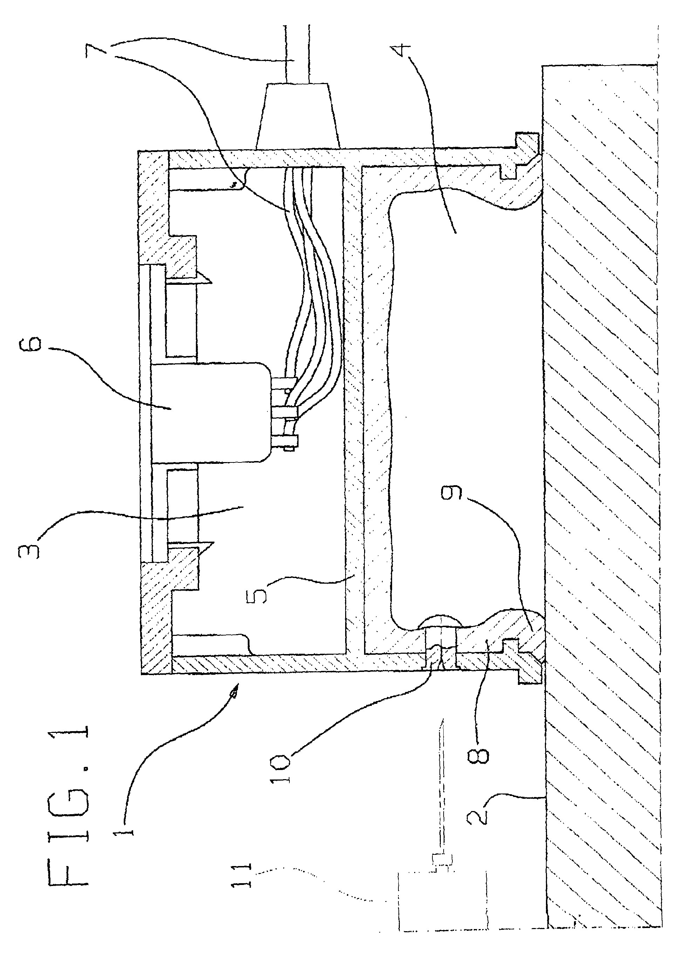

- With reference to these figures, and in particular Figure 1, number 1 indicates the box as a whole, shown installed on a surface 2, for example a wall.
- The box structure 1 is divided into two, non communicating chambers 3 and 4 separated by an internal wall 5.
- One of the chambers 3, hereafter called the front chamber 3, is suitable for holding electrical components, for example a power outlet 6 and connected wiring 7;
- The other chamber 4, hereafter called the rear chamber 4, is fully lined with an integral silicone core 8 or pneumatic chamber 8, edged with a seam or thickening 9 that protrudes beyond chamber 4. Using valve 10, the needle of a pneumatic syringe 11 can be passed through the appropriately arranged wall of the box structure 1 so that the air contained therein can be removed. The function of the pneumatic syringe is described below.

### Detailed dynamic description of the preferred embodiment

- Having thus completed the static description of the preferred example for the realization of the structure according to the present invention, below follows a dynamic description of its function:
- The box structure 1, equipped with the front chamber 3 containing a power outlet 6 or some other electrical system accessory, set in front of rear chamber 4, can be placed on a wall 2 or on any other support surface and kept pressed during application.
- Syringe 11 is then inserted through valve 10 and used to empty the air from the pneumatic chamber 8 located inside the rear chamber 4; in this way it is the pneumatic chamber itself, through the edging seam 9, that exerts a "suction cup" effect against the wall 2, adhering to the wall and supporting the entire box structure 1 and the accessories contained therein.
- If the wall or surface is rough and does not lend itself to the "suction cup" effect, the point can be covered with a standard self-sticking adhesive film, preferably transparent so that the esthetics of the area are not affected in achieving the function.

### Alternative realization

- Obviously, in other alternative forms of realization-still falling under the general solution concept indicated above as an example of realization and claimed below-the structure covered by the present invention can be produced with equivalent techniques and mechanics, equipped with other integrating measures, and the relative parts can be of varying shape as needed to meet the purpose. In particular, purely as an example which is in no way limiting:
- the box structure can be of any shape and size that proves suitable for the purpose;
- any type of accessories can be contained; realizations are conceivable where the container serves for purposes other than electrical components;
- the pneumatic chamber can be made of any material which proves suitable for the function and can be made integral with the housing in any way appropriate for the purpose.

### Advantages of the invention

- As is made evident by the detailed description above of an example of an arrangement and mention of some variations to the realization, the structure according to the present invention offers the advantages pursuant to the purposes laid out as well as still others. In fact, it integrates a functional, modular, polyvalent, economical means to provide permanent wall-mounted electrical power outlets, switches and in general electrical components where no system shunt is available.

## Claims

1. Wall container especially for electrical components **characterized by** the fact that it includes at least one chamber (4) integral with means (8) that can be placed under a vacuum to interface with walls (2) and similar surfaces making the container adhere.

2. Container as indicated in the claim above, **characterized by** the fact that said chamber (4) is internally lined with an integral core (8) of elastically deformable material that can be emptied of the air and interface with walls (2) and similar surfaces.

3. Container as in the claims above, **characterized by** the fact that said core (8) of elastically deformable material can be emptied of air through use of a valve (10) that can be penetrated by the needle of a pneumatic syringe (11).

4. Container as in the claims above, **characterized by** the fact that said core (8) of elastically deformable material is edged with a seam or thickening (9) that protrudes beyond said chamber (4).

5. Container, as in the claims above, **characterized by** the fact that it can be of any shape and size required to suit the purpose.

6. Container, as in the claims above, **characterized by** the fact that it can contain any sort of accessories of any nature and of any type.

7. Container, as in the claims above, **characterized by** the fact that said core (8) is made of any material appropriate for the function.

8. Container, as in the claims above, **characterized by** the fact that said core (8) is made integral with its housing in any manner appropriate for the purpose.
